# EUROPEAN PATENT APPLICATION

(11) **EP 2 274 972 A1**
(43) Date of publication of application: **19.01.2011**
(21) Application number: 09742178.8
(22) Date of filing: 08.05.2009
(51) Int. Cl.: A01G 27/04

(54) **IRRIGATION DEVICE**

(30) Priority: 08.05.2008 ES 200801323
(71) Applicant: Escudero Archilla, Gabriel, 07184 Calvia (ES)
(72) Inventor: Escudero Archilla, Gabriel, 07184 Calvia (ES)
(74) Representative: Gallego Jiménez, José Fernando
(86) International application number: PCT/ES2009/000245
(87) International publication number: WO 2009/135972

(57) **Abstract**

The invention relates to a device comprising a container (1) having an upper filling mouth (11), for storing water to be supplied by at least one threat (2) or strand of material that can be impregnated by water by capillarity once the container has been buried. Said container (1) comprises openings (12) at the top thereof, below the level of the filling mouth (11), from which the threads (2) consisting of synthetic fibres emerge together. Said threads have at least one inner section (21) with an end extending inside the container (1), to the bottom thereof, and an outer section (22) which comes into contact with the earth. Once the container (1) is buried up to the level of the upper mouth (11), with the openings (12) below the ground level, the threads (2) carry out a gradual transfer of the water from the inside to the outside of the container (1), by capillarity.

## Description

### Object of the invention.

The present invention relates to an irrigation device, more specifically to a device for irrigation by capillarity.

### Background of the invention.

Currently there are several irrigation systems for dosing water progressively over time, thereby achieving an improved effect that is similar to supplying water to the plants as they need watering, although it is incorrect in practice.

Correspondingly, this is the known object of Spanish patent ES2217922 for "Device and container for irrigation by capillarity", which describes a container for irrigation by capillarity, the container comprising, at the bottom, means for providing irrigation water to the soil through a set of synthetic tissue fibres located inside a support that is attached to the irrigation container. Thus, the device provides constant and dosed irrigation water, regardless of supply pressures. This device only avoids an excessive flow of water out of the container since the tissue fibres are located at the lower part of the container slowing down in a more or less effective way the free flowing out of water, which is therefore subject to the pressure of the column of water in the container.

Thus, the question posed is the development of an irrigation device that provides an adequate water supply adapted to the demand of the plant and that is effective under all conditions of moisture in the soil where plant' s roots are.

### Description of the invention.

The irrigation device object of this invention has some technical features to improve water supply to cultivated plants by adapting to the conditions and needs of plants, regardless of the water supplied to the soil or earth by additional irrigation systems or simply by rain. The main application of this device is the irrigation in pots, planters, gardens or reforestation, helping fruit trees and bushes to take root, and is therefore suitable of both indoor and outdoor use.

This device comprises a container having orifices at the top thereof, below the level of the upper filling mouth. From these orifices threads consisting of synthetic fibre emerge together and have at least one inner section with an end extended inside the container to the bottom thereof, and an outer section arranged on the outer surface of the container coming into contact with the earth soil and operationally suitable once the container is buried up to the level of the upper mouth, with the orifices below the ground level, the threads carry out a gradual transfer of water from the inside to the outside of the container.

In order for the inner section of each thread to come into contact with the stored water it is provided that the submerged end is attached to a weight ensuring its arrangement at the bottom of the container.

Thus, the invention provides two primary advantages of operation, the first one being that the transfer of water between the container and the surrounding earth is in fact by capillarity allowing the graduation of water flow with dependence to the moisture difference between the interior of the water container and the earth outside. In addition, it is even possible for the flow to reverse smoothly in case the outside moisture becomes excessive, such as when it has been already conventionally irrigated or because it rained heavily, and the container is empty or nearly empty of water, thus proceeding to fill it automatically.

The outer sections of the threads arranged on the surface of the container are tied or interwoven together, thus allowing the roots of plants to intertwine with the tissue of these threads and facilitating the passage of water from the container to the plants.

In one embodiment the outer sections of the thread are arranged emerging above the orifices towards the filling mouth and tied together by forming a ring buried below said filling mouth. This will ensure the complete irrigation by capillarity of the soil and of the surface layer of the earth.

To prevent soil from entering through the orifices for the threads, it is provided that these orifices are plugged with synthetic fibre, such as polyamide allowing the passage of water.

The upper mouth has a narrowing and is flared for receiving an inverted bottle for storing additional water. In this way it is possible to increase the water capacity of the device, and as the container water is consumed, the bottle supplies more water.

In one embodiment, the bottle has an ornamental or disguised shape to be camouflaged with the garden surroundings, for example by adopting the shape of a bamboo or other decorative trunk.

The vessel is of a mainly non-porous nature, such as terracotta or clay, which can be recycled and has low environmental impact. In turn the threads consist of polyamide so they do not rot and are inert in contact with plant roots.

Since the container holding the device is buried, in order to control its content it has been provided with a level meter consisting of a floating body upwardly extending as an indicating rod emerging through a cap with a through orifice of the filling mouth.

In one embodiment, the cap has a concave, open-topped, bowl-shaped configuration, attachable to the filling mouth, having on its walls a plurality of orifices for the passage of refill water without having to remove it. The cap has a central tubular passage securing the indicating rod in a completely free way. This configuration allows the filling on one side of the container or vessel without opening it, which is more convenient, and, on the other side, in case of rain, the device is refilled naturally.

The cap has a certain amount of gravel or loose material inside, through which the water is filtered. This gravel has a dual mission as it prevents the proliferation of mosquitoes and insects in the stored water, and also hides the plug orifices but allowing the passage of water for refilling the container.

The device can also be used for the progressive supply of fertilizers and phytosanitary products such as insecticides and fungicides dissolved in the water held in the container.

This device can also be used as a controller in the drip lines for horticultural and ornamentals crops.

### Description of the figures.

In order to complement the description that is being carried out and with the purpose of facilitating the understanding of the characteristics of the invention, the present description is accompanied by a set of drawings wherein, by way of a non-limiting example, the following has been represented:

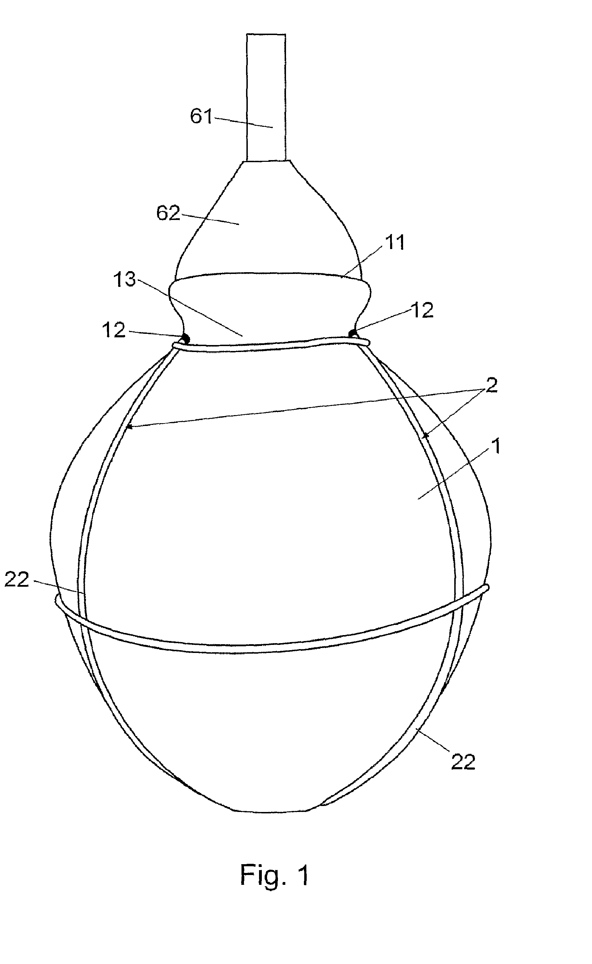

- Figure 1 shows an elevation view of the device.

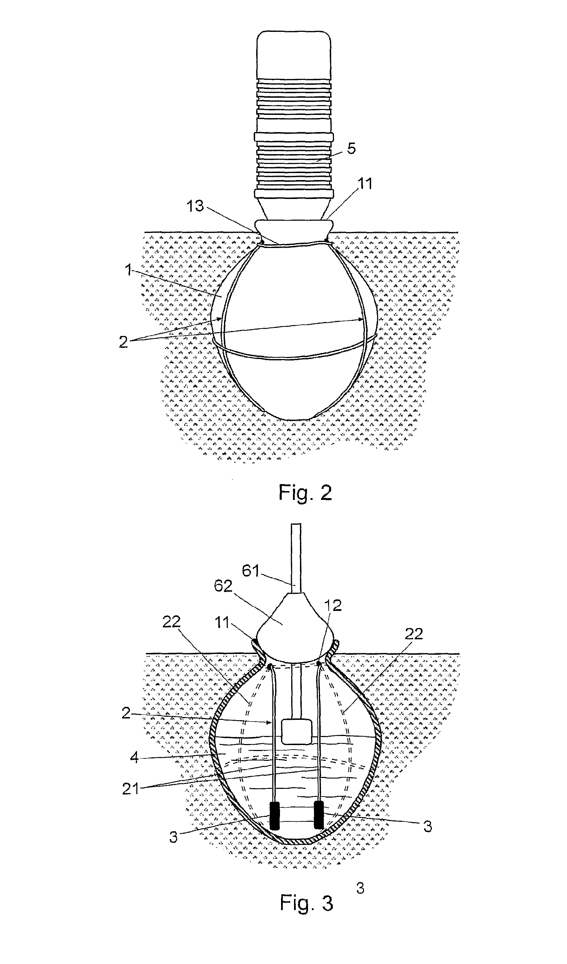

- Figure 2 shows an elevation view of a way of using the device with a bottle for additional water supply.
- Figure 3 shows an elevation view in longitudinal section of the device.
- Figure 4 shows a perspective view of one embodiment of the bowl-shaped cap with orifices on it and the level meter indicating rod.
- Figure 5 shows an elevation sectional view of the device with the plug of the previous figure positioned.
- Figure 6 shows an elevation view of a way of using the device with a bottle having a decorative faux bamboo look and outer sections arranged upwards and over the neck of the container to facilitate the capillary action.

### Preferred embodiment of the invention.

As can be seen in the referenced figures, the device comprises a non-porous terracotta container (1) with an upper filling mouth (11) and orifices (12) arranged near and below the filling mouth (11), with threads (2) of synthetic fibres, herein polyamide, passing through these orifices (12), the container (1) being intended to be buried about up to the level of the filling mouth (11), on the ground next to the plants to be irrigated.

The threads (2) of capillary water supply have one end of the inner section (21) extending to the bottom of the container (1) and attached to a weight (3) that ensures their positioning on the bottom, below the inner water level (4). In turn, the outer sections (22) of the threads (2) are arranged extending over the surface of the container (1) and tied together to configure a network or similar, where the roots of plants that are being irrigated can get caught. In a preferred embodiment, the orifices (12) are plugged with polyamide fibres around the threads (2).

The filling mouth (11) has a narrowing (13) and is flared for receiving an inverted bottle (5) of additional water storage, which increases the irrigation capacity of the device.

In a preferred embodiment the device comprises a level meter (6) consisting of a floating body extending upwards in an indicating rod (61) emerging through a hole in a cap (62) in the filling mouth (11) of the container (1).

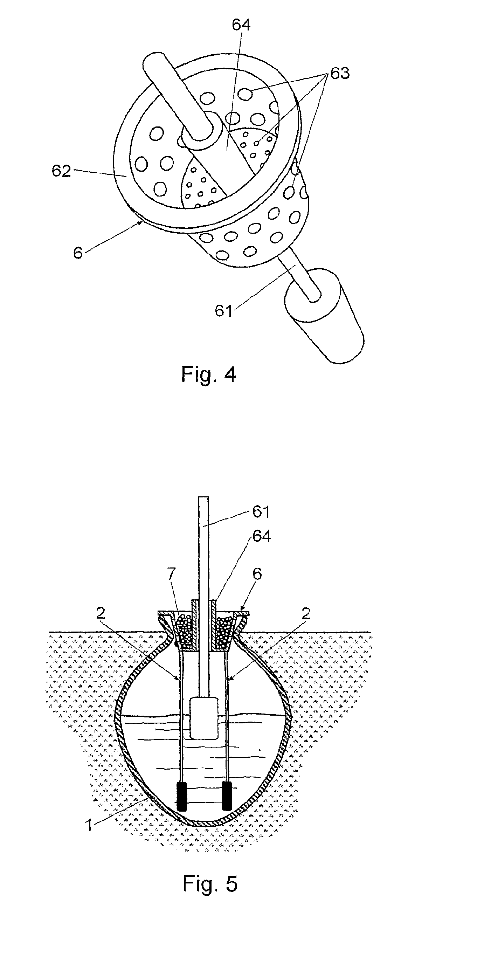

In one embodiment, shown in figures 4 and 5, the cap (62) has a top opened bowl-shaped concave configuration, and is coupled to the upper filling mouth (11). This cap (62) has a plurality of orifices (63) on its walls for the passage of water for filling the device and a central tubular passage (64) for guiding the filling indicating rod (61). In the space inside the cap (62) is a certain amount of gravel (7), aggregates or loose material that acts as a barrier to the entry of insects and other pests into the container (1), but allows filtering water for filling the container.

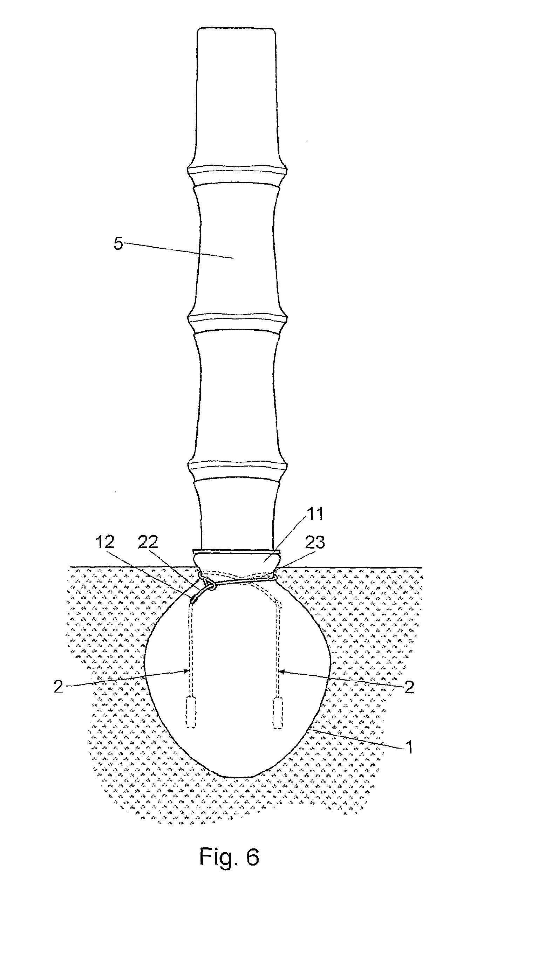

In figure 6, an alternative embodiment of the device having on its top the bottle (5) configured with a decorative cylindrical shape and made of glass for assessing the level of water inside, with spaced surrounding rings arbitrarily simulating a bamboo trunk. In this figure 6 it is also represented an alternative arrangement of the outer sections (22) of the threads (2), for a maximum utilization of the water capillary extraction, these outer sections (22) of the threads (2) being oriented upwards above the orifices (12) towards the filling mouth (11) and tied together, forming a ring or hoop (23) below said filling mouth (11).

Once the nature of the invention as well as an example of preferred embodiment have been sufficiently described, it is stated for all pertinent purposes that the materials, form, size and arrangement of the elements described are susceptible to changes, provided it does not involve an alteration of the essential characteristics of the invention that are claimed subsequently.

## Claims

1. Irrigation device, of the type comprising a container (1) with an upper filling mouth (11) for storing water to be supplied by at least one thread (2) or strand of material that can be impregnated by water by capillarity once the container has been buried, **characterized in that** the container (1) comprises orifices (12) at the top thereof, below the level of the upper filling mouth (11), synthetic fibre threads (2) emerging from said orifices (12) and having at least one inner section (21) with one end extended inside the container (1) to the bottom thereof and an outer section (22) arranged on the outer surface of the container (1) contacting the ground and operationally suitable so that, once the container (1) is buried up to the level of the upper mouth (11) with the orifices (12) located below said ground level, the threads (2) carry out a gradual transfer of water between the inside and the outside of the container (1) by capillarity.

2. Device according to claim 1, **characterized in that** the submerged end of the inner section (21) of the thread (2) or threads is attached to a weight (3) ensuring its arrangement at the bottom of the container (1).

3. Device according to claim 1, **characterized in that** the outer sections (22) of the threads (2) arranged on the surface of the container (1) are tied or interwoven together.

4. Device according to claim 3, **characterized in that** the outer sections (22) of the threads (2) are arranged emerging above the orifices (12) towards the filling mouth (11) and tied together by forming a ring (23) buried below said filling mouth (11).

5. Device according to claim 1, **characterized in that** the orifices (12) are plugged with synthetic fibre around the thread (2).

6. Device according to claim 1, **characterized in that** the upper filling mouth (11) has a narrowing (13) and is flared for receiving an inverted bottle (5) for storing additional water.

7. Device according to claim 6, **characterized in that** the bottle (5) has an ornamental or disguised shape to be camouflaged with the garden surroundings.

8. Device, according to claim 1, **characterized in that** the container (1) is made of terracotta.

9. Device, according to claim 1, **characterized in that** the threads (2) are made of polyamide.

10. Device according to claim 1, **characterized in that** it comprises a level meter (6) consisting of a floating body upwardly extending as an indicating rod (61) emerging through a cap (62) of the filling mouth (11).

11. Device according to claim 10, **characterized in that** the cap (62) of the level meter (6) has a concave, open-topped, bowl-shaped configuration, attachable to the filling mouth (11), having on its walls a plurality of orifices (63) for the passage of refill water without having to remove it, and a central tubular passage (64) for guiding the indicating rod (61).

12. Device according to claim 11, **characterized in that** the cap (62) has a certain amount of gravel (7), aggregates or loose material inside of it for hiding the orifices (63) of the cap and allowing the passage of water into the container (1).
